# EUROPÄISCHE PATENTSCHRIFT

(11) **EP 1 125 176 B1**
(45) Veröffentlichungstag und Bekanntmachung des Hinweises auf die Patenterteilung: **17.12.2003**
(21) Anmeldenummer: 99957878.4
(22) Anmeldetag: 11.10.1999
(51) Int. Cl.: G05D 1/03

(54) **ABSTURZSICHERES AUTONOMES FAHRSYSTEM MIT BEREICHSMARKEN**
CRASH-PROTECTED AUTONOMOUS TRAVEL SYSTEM WITH AREA MARKERS
SYSTEME MOBILE AUTONOME ANTI-CHUTE A REPERES DE ZONE

(30) Priorität: 23.10.1998 DE 29818932 U
(43) Veröffentlichungstag der Anmeldung: 22.08.2001
(73) Patentinhaber: Siemens Aktiengesellschaft, 80506 München (DE)
(72) Erfinder: WIEGAND, Hermann-Josef, D-91083 Baiersdorf (DE)
(86) Internationale Anmeldenummer: DE9903263
(87) Internationale Veröffentlichungsnummer: WO00025187

(56) Entgegenhaltungen:
- EP-A- 0 278 853
- GB-A- 2 143 969
- US-A- 4 593 239
- US-A- 4 811 228
- US-A- 5 367 458

## Beschreibung

Die Erfindung betrifft eine autonomes Fahrsystem, welches selbstfahrende Mobileinheiten enthält. Ein derartiges autonomes Fahrsystem kann z.B. in Form eines sogenannten fahrerlosen Transportsystems für verschiedenste Aufgaben eingesetzt werden. Als eine von vielen Anwendungen dieser Art soll beispielhaft der Transport einer Reinigungseinrichtung angeführt werden. Solche Fahrsysteme werden auch autonome Reinigungsroboter genannt.

Fahrsysteme älterer Bauart weisen kontaktlose Führungsmittel auf, welche im Boden des jeweiligen Fahrbereiches eingelassen sind, z.B. in einer Industriehalle. Diese dienen als eine Art elektronischer Schiene bzw. Spur, z.B. auf magnetischer Basis, für die selbstfahrenden Mobileinheiten des Fahrsystems.

Bei Fahrsystemen neuerer Bauart bewegen sich die selbstfahrenden Mobileinheiten, welche auch als mobile Roboter bezeichnet werden können, in einem zugewiesenen Fahrbereich quasi autonom unter der Führung einer in der Regel programmgeführten Steuereinrichtung. Diese tastet einen zumindest in Fahrtrichtung vor einer Mobileinheit liegenden Erfassungsbereich mittels einer berührungslosen Raumabtasteinrichtung ab. Dabei kann es sich um einen Pulslaserscanner oder ein Ultraschallsensorsystem handeln. Die Steuereinrichtung führt ein Navigationsprogramm aus, welches z.B. im Falle eines autonomen Reinigungsroboters die Aufgabe hat, die Mobileinheit mit möglichst gleichmäßiger Abdeckung über den gesamten Fahrbereich zu bewegen, damit die mitgeführte Reinigungseinrichtung die vorgesehene Reinigungsaufgabe ausführen kann.

Die programmgeführte Steuereinrichtung führt in der Regel zusätzlich zu dem Navigationsprogramm auch einen Algorithmus aus, welcher eine Kollision einer Mobileinheit mit Objekten vermeidet, die im Erfassungsbereich detektiert werden. Bei beweglichen Objekten, z. B. Personen, kann der Algorithmus zur Kollisionsvermeidung die Mobileinheit vorübergehend still setzen, bis das bewegliche Objekt den Erfassungsbereich verlassen hat. Bei feststehenden Objekten, z. B. Gegenständen und Gebäudeteilen, werden unter Umständen Umfahrungen ausgeführt.

Eine weitere, möglicherweise auch von öffentlichen Aufsichtsbehörden geforderte Sicherheitsfunktion für autonome Fahrsysteme besteht darin, dass die Mobileinheiten des autonomen Fahrsystems unter allen Umständen gegen einen Absturz gesichert werden sollten. Dabei tritt die Gefahr eines Absturzes in der Regel erst dann auf, wenn z. B. auf Grund eines Fehlers bzw. einer Unregelmäßigkeit bei der Ausführung des normalen Navigationsprogramms eine Mobileinheit in eine an sich nicht vorgesehene Position gelangt.

Zur Absturzsicherung kann das Fahrsystem zusätzliche bauliche Maßnahme zur konstruktiven Begrenzung des zugewiesenen Fahrbereiches aufweisen, z. B. Gitter und Absperrungen. Dabei tritt aber das Problem auf, dass derartige mechanische Begrenzungen nicht nur sehr aufwendig sind, sondern in vielen Fällen an potentiellen Absturzbereichen, wie z. B. an Treppen, Rampen, Bahnsteigen u. v. m. aus praktischen Gründen nicht aufstellbar sind.

Aus GB-A-2 143 969 ist eine Fahrzeugführung bekannt, die entlang der Fahrspur angebrachte, mit einem Strichcode versehene Marken erkennt, mit der dadurch gewonnenen Information nötige Kurskorrekturen berechnet und das Fahrzeug entsprechend steuert.

In EP-A-0 278 853 wird beschrieben, dass ein autonomes Fahrzeug stillgesetzt werden kann, wenn die entlang der Spur angebrachten, zur Fahrzeugführung verwendeten magnetischen Marken nicht mehr erfasst werden.

Der Erfindung liegt die Aufgabe zu Grunde, ein autonomes Fahrsystem, dessen mindestens eine Mobileinheit zumindest mit einer Steuereinrichtung und einer berührungslosen Raumabtasteinrichtung ausgerüstet ist, weiter so auszubilden, dass eine Absturzsicherung der Mobileinheit auch ohne konstruktive, mechanische Begrenzungen des Fahrbereiches möglich ist.

Die Aufgabe wird gelöst mit einem autonomen Fahrsystem, welches die im Anspruch 1 aufgeführten Merkmale aufweist.

Das absturzsichere autonome Fahrsystem gemäß der Erfindung enthält Bereichsmarken, welche im Fahrbereich räumlich verteilt angeordnet sind. Ferner enthält die mindestens eine selbstfahrende Mobileinheit des Fahrsystems eine berührungslose Raumabtasteinrichtung mit einem Erfassungsbereich, in dem die Raumabtasteinrichtung zumindest den vor der Mobileinheit in Fahrtrichtung liegenden Fahrbereich abtastet und zumindest darin befindliche Bereichsmarken erfaßt. Desweiteren enthält die mindestens eine selbstfahrende Mobileinheit des Fahrsystems eine programmgeführte Steuereinrichtung, welche mit der Raumabtasteinrichtung verbunden ist und die Mobileinheit stillsetzt, wenn die Raumabtasteinrichtung keine Bereichsmarke mehr erfaßt, welche in einem ersten Sicherungsteilbereich des Erfassungsbereiches liegt.

Das erfindungsgemäße System beruht darauf, daß als ein Sicherheitskriterium gegen einen Absturz mindestens eine Bereichsmarke innerhalb des ersten Sicherungsteilbereichs des Erfassungsbereiches liegt und von der Steuereinrichtung detektierbar sein muß. Ist diese Bedingung erfüllt, kann die Mobileinheit von der Steuereinrichtung nach der insbesondere von der Art der Mobileinheit abhängigen Navigationsstrategie unbeeinträchtigt bewegt werden. Das erfindungsgemäße System kann folglich anschaulich mit einer virtuellen optischen Leine verglichen werden, welche erst aktiv wird, wenn die Mobileinheit die dadurch bestimmten virtuellen Grenzen erreicht hat. Die Absturzsicherung gemäß der Erfindung kann somit,uneingeschränkt additiv neben weiteren, in der Regel bereits vorhandenen und auf die Steuereinrichtung einwirkenden Navigations- und Sicherungprogrammen eingesetzt werden.

Eine derartige Ausführung weist den weiteren Vorteil auf, daß zur Erzielung der zusätzlichen Funktion der Absturzsicherung an vorhandenen, selbstfahrenden Mobileinheit keine äußerlichen, konstruktiven Veränderungen vorgenommen werden müssen. Vielmehr ist die Funktion der Absturzsicherung durch programmtechnische Anpassungen der Steuereinrichtung implementierbar. Diese Anpassungen sind in der Praxis auf einfache Weise mittels Laden von Programmbestandteilen durchführbar.

Erfindungsgemäß wird die Absturzsicherung dadurch erzielt, daß in dem Erfassungsbereich der Raumabtasteinrichtung, welcher in aller Regel ohnehin zum Zwecke der normalen Navigation und/oder Kollisionsvermeidung vorhanden und von der programmgeführten Steuereinrichtung entsprechend ausgewertet wird, eine zusätzlicher, entsprechend gestalteter Sicherungsteilbereich definiert ist. Das Programm der Steuereinrichtung wertet also dieses spezielle Segment des Erfassungsbereiches gesondert mit Ziel der Sicherung der Mobileinheit gegen Absturz aus.

Ein weitere Vorteil der Erfindung wird darin gesehen, daß die im Fahrbereich räumlich verteilt angeordneten Bereichsmarken keine künstlichen Hindernisse insbesondere für Personen darstellen. Vielmehr können diese z.B. an ohnehin vorhandenen Gebäudeteilen, wie z.B. Wänden, Säulen, Decken u.dgl. ohne Beeinträchtigung vorhandener Raum- und Bewegungsstrukturen angebracht werden. Auf Grund der Ausdehnung des Erfassungsbereiches und des darin befindlichen Sicherungsteilbereichs müssen die Bereichsmarken nicht in unmittelbarer räumlicher Nähe einer potentiellen Absturzstelle der Mobileinheit angebracht sein. Vielmehr können diese um eine maximale Ausdehnung des Sicherungsteilbereichs, d.h. quasi um die Länge der optischen Leine des Systems, entfernt sein. Stellt die potentielle Absturzstelle z.B. ein Treppenpodest dar, so ist dessen Begehbarkeit für Personen nicht durch Bereichsmarken des erfindungsgemäßen Fahrsystems beeinträchtigt.

Weitere, vorteilhafte Ausführungsformen der Erfindung sind in den Unteransprüchen enthalten.

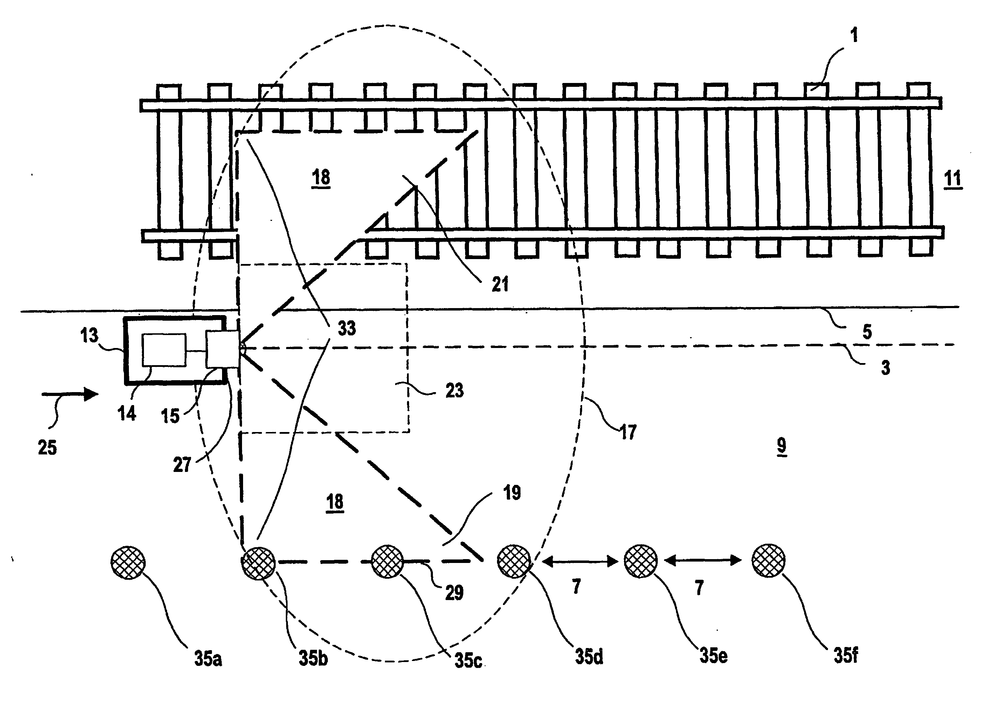

Die Erfindung wird des weiteren anhand eines, in der Figur dargestellten Ausführungsbeispieles weiter erläutert. Dabei zeigt die Figur in Draufsicht eine Mobileinheit, die auf einem Fahrbereich, welcher einen potentiellen Absturzbereich aufweist, absturzsicher geführt wird.

Die Figur zeigt in Draufsicht einen beispielhaft als Fahrbereich 9 dienenden Bahnsteig. Dieser bildet ein erhöhtes Fahrniveau für eine beispielhafte, selbstfahrende Mobileinheit 13 und ist von einem, mit einer Gleisanlage 1 belegten, erniedrigten Absturzniveau 11 über eine Bahnsteigkante 5 getrennt. Diese stellt einen potentiellen Absturzbereich dar. Das erfindungsgemäße autonome Fahrsystem sorgt dafür, daß die selbstfahrende Mobileinheit 13 die Bahnsteigkante 5 keinesfalls überfährt. Im Beispiel der Figur wird hiermit der Selbstfahrbereich der Mobileinheit an einer strichliert dargestellten und quasi die Spurmitte der Mobileinheit darstellenden Linie 3 begrenzt.

Erfindungsgemäß sind in der Figur exemplarisch sechs Bereichsmarken 35a bis 35f beispielhaft im Fahrbereich 9 räumlich verteilt angeordnet. Selbstverständlich können weitere, in der Figur nicht gezeigte Bereichsmarken vorhanden sein, welche etwa in Form einer z.B. ringförmig geschlossenen Anordnung räumlich verteilt sind. Im Beispiel der Figur sind die Führungsmarken 35a bis 35f beispielhaft linienförmig, parallel zur ebenfalls linienförmigen Bahnsteigkante 5 in einem mit einem Doppelpfeil 7 markierten, annähernd gleichen Abstand angeordnet.

Die selbstfahrende Mobileinheit 13, welche sich in dem Beispiel der Figur gerade entlang der Begrenzung 3 des Selbstfahrbereichs 9 in Richtung des Pfeiles 25 bewegt, enthält eine berührungslose Raumabtasteinrichtung 15 mit einem Erfassungsbereich 17. Die Raumabtasteinrichtung 15, bevorzugt ein Pulslaserscanner, ist am Kopfende 27 der Mobileinheit 13 angebracht und insbesondere über einen Datenbus mit einer Steuereinrichtung 14 verbunden. Der Erfassungsbereich 17 weist im Beispiel der Figur einen ovalen Querschnitt auf. Der in dem Erfassungsbereich 17 zumindest vor der Mobileinheit 13 in Fahrtrichtung 25 liegende Ausschnitt des Fahrbereiches 9 wird durch die Raumabtasteinrichtung 15 abgetastet und die im Beispiel darin befindlichen Bereichsmarken 35b,35c,35d erfaßt.

Erfindungsgemäß wird von der programmgeführten Steuereinrichtung 14 in der Mobileinheit 13 nur ein Teil des Erfassungsbereiches 17 zum Zwecke der Absturzsicherung ausgewertet. Dieser weist im Beispiel der Figur das Bezugszeichen 18 auf und wird nachfolgend als erster Sicherungsteilbereich bezeichnet. Der erste Sicherungsteilbereich 18 weist eine annähernd beidseitig von der Fahrtrichtung 25 der Mobileinheit 13 abgewandte rechte und linke Erfassungskeule 19 und 21 auf. Die maximalen Ausdehnung beider Erfassungskeulen quer zur Fahrtrichtung ist mit dem Bezugszeichen 33, und die maximale Ausdehnung einer jeden Erfassungskeule in Fahrtrichtung ist mit dem Bezugszeichen 29 gekennzeichnet.

Erfindungsgemäß wird die Mobileinheit 13 von der Steuereinrichtung stillgesetzt, wenn die Raumabtasteinrichtung 15 keine Bereichsmarke mehr erfaßt, welche im ersten Sicherungsteilbereich 18 des Erfassungsbereiches 17 liegt. Dabei wird die Mobileinheit 13 bei Nichterfassung zumindest einer der Bereichsmarken 35a bis 35f zwangsweise endgültig stillsetzt, so daß eine Wiederinbetriebnahme der Mobileinheit z.B. erst nach einem Eingriff bzw. einer Überprüfung durch eine Bedienperson möglich ist.

Die maximalen Ausdehnungen des ersten Sicherungsteilbereichs 18 insbesondere in Fahrtrichtung 25 bestimmen quasi die Länge der "optischen Leine" des erfindungsgemäßen Fahrsystems im Rahmen der Absturzsicherung. Vorteilhaft ist der Abstand 7 benachbarter Bereichsmarken kleiner als die maximale Ausdehnung 29 des ersten Sicherungsteilbereichs 18 in Fahrtrichtung 25 der Mobileinheit 13. Im Beispiel der Figur liegen die benachbarten Bereichsmarken 35c und 35d innerhalb dieses äußeren Kantbereichs 29 der rechten Erfassungskeule 19 und werden von Raumabtasteinrichtung 15 und Steuereinrichtung 14 erkannt. In vergleichbarer Weise könnten auch zumindest zwei benachbarte Bereichsmarken am hinteren Kantbereich 33 in der rechten bzw. in der linken Erfassungskeule erkannt werden.

Gemäß einer weiteren Ausführung weist das absturzsichere autonome Fahrsystem vorteilhaft Träger zur Halterung von Bereichsmarken auf, welche derart ausgestaltet und/oder angebracht sind, daß eine Bereichsmarke nahezu aus jeder Raumrichtung vom Erfassungsbereich 17 der Mobileinheit 13 detektierbar ist. Derartige Träger sind bevorzugt säulen- bzw. halbkugelförmig gestaltet und an Decken bzw. Tragteilen von Gebäuden angebracht.

Die Bereichsmarken können z.B. in Form einer Folie ausgebildeten sein, welche auf die Außenseite eines Trägers aufgelegt ist. Ferner können die Oberflächen von Bereichsmarken so gestaltet sein, daß diese von der Raumabtasteinrichtung, z.B. einem Pulslaserscanner, und der Steuereinrichtung einer Mobileinheit nicht nur als Marken im allgemeinen, sondern konkret als Bereichsmarken detektierbar sind, welche zur Absturzsicherung dienen. Hierdurch können diese Marken durch das Fahrsystem automatisch von anderen Marken unterschieden werden, welche im Fahrbereich zu einem weiteren, nicht der Absturzsicherung dienenden Zweck angeordnet sind.

Wie oben bereits ausgeführt, können im Erfassungsbereich 17 der Raumabtasteinrichtung 15 auch weitere Segmente definiert und von der Steuereinrichtung zu anderen Zwecken ausgewertet werden, z.B. zur Kollisionsvermeidung. Im Beispiel der Figur enthält der Erfassungsbereich 17 annähernd unmittelbar in Fahrtrichtung 25 der Mobileinheit 13 einen zweiten Sicherungsteilbereich 23. Hierbei wird die Mobileinheit 13 von der Steuereinrichtung 14 zwangsweise vorübergehend stillgesetzt, wenn die Raumabtasteinrichtung 15 einen im zweiten Sicherungsteilbereich 18 befindlichen Körper erfaßt. Nach Entfernung des Körpers kann sich die Mobileinheit selbständig wieder in Bewegung setzen.

## Patentansprüche

1. Autonomes Fahrsystem, mit
a)Bereichsmarken (35a-35f), welche in einem Fahrbereich (9) räumlich verteilt angeordnet sind, und
b)mindestens einer selbstfahrenden Mobileinheit (13), mit
b1) einer berührungslosen Raumabtasteinrichtung (15) mit einem Erfassungsbereich (17) für Bereichsmarken (35a-35f), und
b2) einer programmgeführten Steuereinrichtung (14), die
b21) mit der Raumabtasteinrichtung (15) verbunden ist, die Mobileinheit (13) mittels Navigationsund Sicherungssprogrammen steuert und innerhalb des Erfassungsbereichs (17) der Raumabtasteinrichtung (15) einen ersten Sicherungsteilbereich (18) definiert, der jeweils eine annähernd beidseitig der Fahrtrichtung (25) der Mobileinheit (13) abgewandte rechte und linke Erfassungskeule (19,21) aufweist, und
b22) die Mobileinheit (13) mittels einer neben den auf die Steuereinrichtung (14) einwirkenden Navigations- und Sicherungsprogrammen eingesetzten, durch programmtechnische Anpassungen der Steuereinrichtung (14) implementierten Absturzsicherung zwangsweise endgültig stillsetzt, wenn im ersten Sicherungsteilbereich (18) keine Begrenzungsmarke (35a-35f) erfassbar ist.

2. Autonomes Fahrsystem nach Anspruch 1, wobei der Abstand (7) benachbarter Bereichsmarken (35c,35d) kleiner ist als eine maximale Ausdehnung (29,33) des ersten Sicherungsteilbereichs (18), insbesondere annähernd in Fahrtrichtung (25) der Mobileinheit (13).

3. Autonomes Fahrsystem nach Anspruch 1 oder 2, mit Trägern zur Halterung von Bereichsmarken (35a-35f), welche derart ausgestaltet und/oder angebracht sind, daß eine Bereichsmarke nahezu aus jeder Raumrichtung vom Erfassungsbereich (17) einer Mobileinheit (13) detektierbar ist.

4. Autonomes Fahrsystem nach einem der vorangegangenen Ansprüche, wobei
a) der Erfassungsbereich (17) annähernd unmittelbar in Fahrtrichtung (25) der Mobileinheit (13) einen zweiten Sicherungsteilbereich (23) aufweist, und
b) die Steuereinrichtung (14) die Mobileinheit (13) zwangsweise vorübergehend stillsetzt, wenn die Raumabtasteinrichtung (15) einen im zweiten Sicherungsteilbereich (18) befindlichen Körper erfaßt.

## Claims

1. Autonomous travel system with
a) area markers (35a-35f) which are spatially distributed in a travel area (9), and
b) at least one self-propelling mobile unit (13) with
b1) a contactless spatial scanning device (15) with a sensing range (17) for area markers (35a-35f), and
b2) a program-controlled control device (14) which
b21) is connected to the spatial scanning device (15), controls the mobile unit (13) by means of navigation and safety programs and, within the sensing range (17) of the spatial scanning device (15), defines a first safety sub-range (18) which has a right-hand sensing lobe (19) and a left-hand sensing lobe (21) which are directed approximately on each side away from the direction (25) of travel of the mobile unit (13), and
b22) ultimately brings the mobile unit (13) to a forced stop by means of a protection against falling employed alongside the navigation and safety programs acting on the control device (14) which is implemented by means of programming-related adaptations to the control device (14) if an area marker (35a-35f) cannot be sensed in the first safety sub-range (18).

2. Autonomous travel system according to Claim 1, wherein the distance (7) between adjacent area markers (35c, 35d) is smaller than a maximum length (29, 33) of the first safety sub-range (18), in particular approximately in the direction (25) of travel of the mobile unit (13).

3. Autonomous travel system according to Claim 1 or 2 with carriers for holding area markers (35a-35f) which are configured and/or mounted in such a way that an area marker is detectable by the sensing range (17) of a mobile unit (13) from virtually any spatial direction.

4. Autonomous travel system according to one of the preceding Claims wherein
a) the sensing range (17) has a second safety sub-range (23) approximately directly in the direction (25) of travel of the mobile unit (13), and
b) the control device (14) temporarily brings the mobile unit (13) to a forced stop if the spatial scanning device (15) senses a body located in the second safety sub-range (18).

## Revendications

1. Système mobile autonome, avec
a) des repères de zone (35a à 35f) qui sont répartis spatialement dans une zone d'action (9), et
b) au moins une unité automobile (13), avec
b1) un dispositif de balayage spatial sans contact (15) avec une zone de couverture (17) pour des repères de zone (35a à 35f), et
b2) un dispositif de commande (14) géré par programme
b21 ) qui est relié au dispositif de balayage spatial (15), qui commande l'unité mobile (13) au moyen de programmes de navigation et de protection et qui définit à l'intérieur de la zone de couverture (17) du dispositif de balayage spatial (15) une première sous-zone de sécurité (18) qui comporte un lobe de couverture droit (19) et un lobe de couverture gauche (21) qui sont sensiblement de chaque coté du sens de déplacement (25) de l'unité mobile (13), et
b22) qui immobilise obligatoirement définitivement l'unité mobile (13) au moyen d'une protection anti-chute, utilisée en plus des programmes de navigation et de protection agissant sur le dispositif de commande (14) et mise en oeuvre par des adaptations informatiques du dispositif de commande (14), lorsque aucun repère de zone (35a à 35f) ne peut être détecté dans la première sous-zone de sécurité (18).

2. Système mobile autonome selon la revendication 1, dans lequel la distance (7) entre des repères de zone voisins (35c, 35d) est inférieure à une dimension maximale (29, 33) de la première sous-zone de sécurité (18), notamment sensiblement dans le sens de déplacement (25) de l'unité mobile (13).

3. Système mobile autonome selon la revendication 1 ou 2, comportant des supports de fixation de repères de zone (35a à 35f) qui sont conçus et/ou installés de telle sorte qu'un repère de zone est détectable à partir de pratiquement chaque direction spatiale de la zone de couverture (17) d'une unité mobile (13).

4. Système mobile autonome selon l'une des revendications précédentes, dans lequel
a) la zone de couverture (17) comporte une deuxième sous-zone de sécurité (23) sensiblement juste dans le sens de déplacement (25) de l'unité mobile (13), et
b) le dispositif de commande (14) oblige l'unité mobile (13) à s'immobiliser provisoirement lorsque le dispositif de balayage spatial (15) détecte un corps situé dans la deuxième sous-zone de sécurité (23).
